# EUROPÄISCHE PATENTSCHRIFT

(11) **EP 2 601 418 B1**
(45) Veröffentlichungstag und Bekanntmachung des Hinweises auf die Patenterteilung: **19.04.2017**
(21) Anmeldenummer: 11731352.8
(22) Anmeldetag: 12.07.2011
(51) Int. Cl.: F16B 5/06, F16B 19/10

(54) **SPREIZNIET**
EXPANDING RIVET
RIVET À EXPANSION

(30) Priorität: 05.08.2010 DE 102010033484
(43) Veröffentlichungstag der Anmeldung: 12.06.2013
(73) Patentinhaber: A. RAYMOND et Cie, 38000 Grenoble (FR)
(72) Erfinder: HAUSER, Ingo, 79400 Kandern (DE)
(74) Vertreter: König Szynka Tilmann von Renesse Patentanwälte Partnerschaft mbB
(86) Internationale Anmeldenummer: PCT/EP2011/061872
(87) Internationale Veröffentlichungsnummer: WO 2012/016797

(56) Entgegenhaltungen:
- GB-A- 2 335 951
- US-A- 5 370 484
- US-A- 5 375 954

## Beschreibung

Die Erfindung betrifft einen Spreizniet gemäß dem Oberbegriff des Patentanspruches 1.

Ein derartiger Spreizniet ist aus GB 2 335 951 A bekannt.

Ein weiterer Spreizniet ist aus EP 0 557 074 A1 bekannt. Der vorbekannte Spreizniet verfügt über einen Nietkörper, der eine Anzahl von Spreizarmen aufweist. Die Spreizarme sind an einem Einsatzabschnitt angeformt, erstrecken sich von dem Einsatzabschnitt weg und enden in einem freien Ende. Weiterhin ist ein in dem Nietkörper in einer Längsrichtung verschiebbar gelagerter Nietstift vorhanden, mit dem die Spreizarme in einer eingeschobenen Endmontagestellung des Nietstiftes radial nach außen bewegbar sind. Der Nietstift weist im Bereich eines von einem Handhabungsende abgewandten Einführende eine dem Einführende zugewandte Hinterrastfläche auf, der die freien Enden der Spreizarme in einer Vormontagestellung des Nietstiftes gegenüber liegen. In der Vormontagestellung weisen die freien Enden der Spreizarme von der Hinterrastfläche einen Abstand auf und umgreifen eine Vorraststufe, die in Einführrichtung des Nietstiftes in den Nietkörper der Hinterrastfläche vorgelagert ist.

Der Erfindung liegt die Aufgabe zugrunde, einen Spreizniet der eingangs genannten Art anzugeben, der sich bei Einfügen des Spreizniets in ein Auflageteil und in ein Trägerteil, die mit dem Spreizniet miteinander zu verbinden sind, durch einen zuverlässigen Schutz von insbesondere auch filigran ausgebildeten freien Enden der Spreizarme auszeichnet.

Diese Aufgabe wird bei einem Spreizniet der eingangs genannten Art erfindungsgemäß mit den kennzeichnenden Merkmalen des Patentanspruches 1 gelöst.

Dadurch, dass bei dem erfindungsgemäßen Spreizniet radial auskragende Fußstege vorhanden sind, die in der Vormontagestellung in radialer Richtung im Bereich der Hinterrastfläche über die freien Enden der Spreizarme überstehen, sind die freien Enden der Spreizarme gegen einen Kontakt mit einem Anbauteil und/oder einem Trägerteil, die mit dem Spreizniet miteinander zu verbinden sind, geschützt, so dass insbesondere auch im Bereich der freien Enden verhältnismäßig filigran ausgebildete Spreizarme sich nicht unbeabsichtigt bei Kontakt mit einem Anbauteil und/oder einem Trägerteil aufbiegen und ein Einführen des Spreizniets verhindern.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung eines Ausführungsbeispieles mit Bezug auf die Figuren der Zeichnung.

Es zeigen:
- Fig. 1: in einer perspektivischen Explosionsansicht ein Ausführungsbeispiel eines erfindungsgemäßen Spreizniets mit einem Nietkörper und mit einem Nietstift,
- Fig. 2: in einer perspektivischen Ansicht das Ausführungsbeispiel eines erfindungsgemäßen Spreizniets gemäß Fig. 1 mit dem bis in eine Vormontagestellung in den Nietkörper eingeschobenen Nietstift,
- Fig. 3: in einer Schnittansicht das Ausführungsbeispiel gemäß Fig. 1 vor einem Anordnen in ein Anbauteil mit dem Nietstift in der Vormontagestellung gemäß Fig. 2,
- Fig. 4: in einer Schnittansicht das Ausführungsbeispiel gemäß Fig. 1 in der Vormontagestellung gemäß Fig. 2 in einer in das Anbauteil eingefügten Anordnung,
- Fig. 5: in einer Schnittansicht das Ausführungsbeispiel gemäß Fig. 1 mit dem Nietstift in der Vormontagestellung gemäß Fig. 2 in der in das Anbauteil eingefügten Anordnung gemäß Fig. 4 vor einem Einführen in ein Trägerteil und
- Fig. 6: in einer Schnittansicht das Ausführungsbeispiel gemäß Fig. 1 mit dem Spreizniet in einer in das Trägerteil eingefügten Anordnung und dem Nietstift in einer Endmontagestellung.

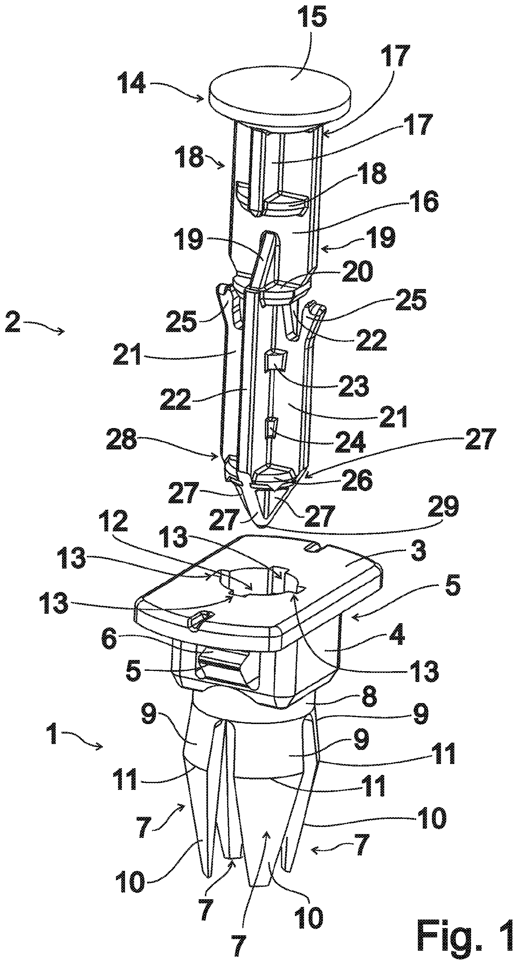

Fig. 1 zeigt in einer perspektivischen Explosionsansicht ein Ausführungsbeispiel eines erfindungsgemäßen Spreizniets, der über einen Nietkörper 1 und über einen in dem Nietkörper 1 in einer Längsrichtung verschiebbar gelagerten Nietstift 2 verfügt. Der Nietkörper 1 ist mit einem bei dem dargestellten Ausführungsbeispiel in etwa rechteckförmigen Auflageteller 3 ausgebildet, an den auf einer Seite ein in etwa quaderförmiger Einsatzabschnitt 4 angeformt ist. An dem Einsatzabschnitt 4 sind an einander gegenüber liegenden Seiten zwei Hintergriffnasen 5 mit dem Auflageteller 3 zugewandten Hinterrastflächen 6 angeformt, die seitlich nach außen über den Einsatzabschnitt 4 überstehen.

Auf der dem Auflageteller 3 abgewandten Seite des Einsatzabschnittes 4 verfügt der Nietkörper 1 bei diesem Ausführungsbeispiel über vier Federarme 7, die über einen Fortsatzabschnitt 8 mit einem runden Querschnitt an den Einsatzabschnitt 4 angeformt sind. Jeder Federarm 7 ist mit einer an den Fortsatzabschnitt 8 angrenzenden Rückschräge 9 und mit einer dem Fortsatzabschnitt 8 abgewandten Vorderschräge 10 ausgebildet, die in einem freien Ende des betreffenden Federarmes 7 endet. In relaxierter Anordnung der Federarme 7 ist jede Rückschräge 9 gegenüber dem Fortsatzabschnitt 8 nach außen ausgestellt, während die Vorderschrägen 10 ausgehend von jeweils einer zwischen der betreffenden Rückschräge 9 und der betreffenden Vorderschräge 10 ausgebildeten Trennkante 11 die Federarme 7 in Richtung der somit filigran ausgebildeten freien Enden verjüngend mit einem Winkel zur Längsrichtung von höchstens etwa 45 Grad, vorzugsweise von höchstens 20 Grad, aufeinander zu laufen.

Der Auflageteller 3 sowie der Einsatzabschnitt 4 verfügen über eine sich in Längsrichtung des Nietkörpers 1 erstreckende Stiftausnehmung 12, die mit einem im Wesentlichen rundlichen Querschnitt mit jeweils mit einem Winkelabschnitt von 90 Grad angeordneten, radial nach außen vorstehenden Führungsnuten 13 ausgebildet ist.

Der Nietstift 2 ist an einem Handhabungsende 14 mit einem scheibenartigen Betätigungsteller 15 ausgestattet, an den ein sich in einer Längsrichtung erstreckender leistenartiger Verbindungsabschnitt 16 mit einem rechteckigen Querschnitt angeformt ist. An den Flachseiten des Verbindungsabschnittes 16 sind sich in etwa bis in die Mitte des Verbindungsabschnittes 16 erstreckende Kopfstege 17 angeformt, an deren von dem Betätigungsteller 15 abgewandten Enden halbkreisartige Abstützteller 18 ausgebildet sind, die mit ihren geraden Randseiten an den Verbindungsabschnitt 16 grenzen.

In einem Abstand von den Abstütztellern 18 sind an den Verbindungsabschnitt 16 keilartige Übergangsstege 19 angeformt, die sich von einem dem Betätigungsteller 15 zugewandten Ende nach außen erstrecken und mit einem an dem dem Betätigungsteller 15 abgewandten Ende des Verbindungsabschnittes 16 angeformten Zwischenteller 20 in Verbindung stehen.

Auf der dem Betätigungsteller 15 abgewandten Seite des Zwischentellers 20 verfügt der Nietstift 2 über Fußstege 21, 22 mit jeweils rechteckigem Querschnitt, die mit jeweils einer Längsseite paarweise rechtwinklig zueinander ausgerichtet miteinander verbunden sind. Zum Stabilisieren sind zwischen den Fußstegen 21, 22 eine Anzahl von Stabilisierungsfüllstücken 23, 24 vorhanden.

An dem dem Zwischenteller 20 zugewandten Ende weisen zwei fluchtend mit einander liegende Fußstege 21, 22 jeweils eine federnde Sicherungsnase 25 auf, die gegenüber dem Verbindungsabschnitt 16, dem Zwischenteller 20 und dem Fußabschnitt 21 nach außen ausgestellt ist. An dem dem Zwischenteller 20 abgewandten Ende des Fußabschnittes 21 ist der Nietstift 2 mit einem eine dem Handhabungsende 14 zugewandte Hinterraststufe bildenden Schutzteller 26 ausgebildet, an den die Fußstege 21, 22 angrenzen.

Auf der dem Betätigungsteller 15 abgewandten Seite des Schutztellers 26 weist der Nietstift 2 in Verlängerung der Fußstege 21, 22 angeordnete, von dem Schutzteller 26 weg aufeinander zu laufende Spitzenstege 27 auf, die im Bereich eines dem Handhabungsende 14 gegenüber liegenden Einführendes 28 in einer Einführspitze 29 enden.

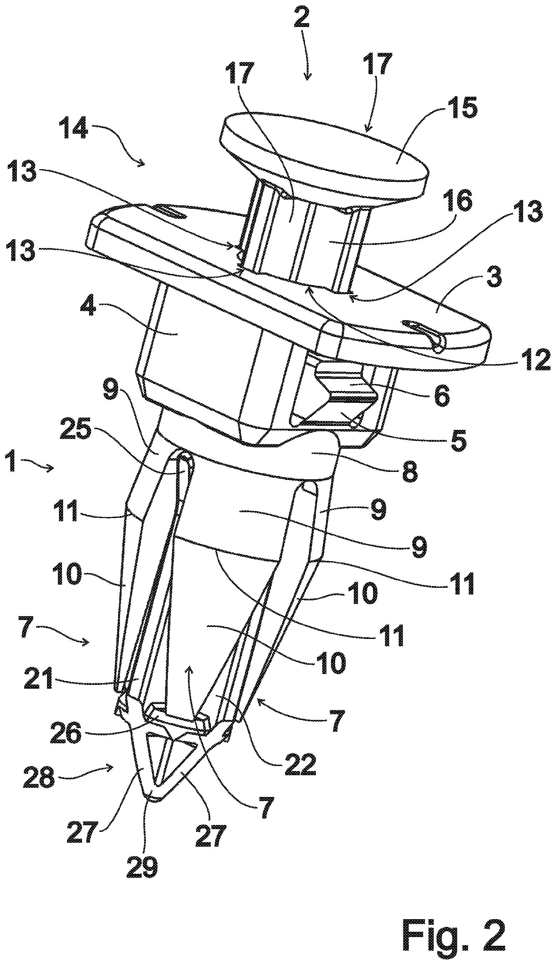

Fig. 2 zeigt in einer perspektivischen Ansicht das Ausführungsbeispiel eines erfindungsgemäßen Spreizniets gemäß Fig. 1 in einer Vormontagestellung, in der der Nietstift 2 so weit in den Nietkörper 1 eingeschoben ist, dass die freien Enden der Federarme 7 auf der der Einführspitze 29 abgewandten Seite des Schutztellers 26 angeordnet sind. In der Vormontagestellung treten die freien Enden der Federarme 7 in radialer Richtung hinter die Außenkanten der Fußstege 21, 22 zurück und schließen in etwa bündig mit der Außenseite des Schutztellers 26 ab. Dadurch sind die freien Enden der Federarme 7 in der Vormontagestellung gemäß Fig. 2 geschützt angeordnet.

Zum Einführen des Nietstiftes 2 in den Nietkörper 1 wird der Nietstift 2 so ausgerichtet, dass die Fußstege 21, 22 in die Führungsnuten 13 eingreifen. Zum Sichern des Nietstiftes 2 in der Vormontagestellung gegen unbeabsichtigtes Herausziehen des Nietstiftes 2 aus dem Nietkörper 1 hintergreifen die Sicherungsnasen 25 eine dem Auflageteller 3 abgewandte Seite von zwischen benachbarten Federarmen 7 ausgebildeten Aussparungen.

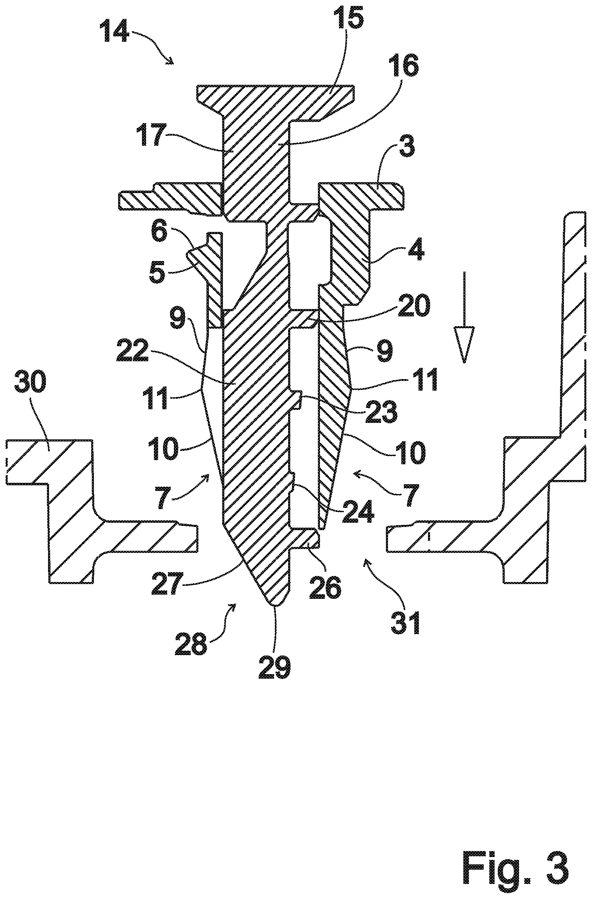

Fig. 3 zeigt in einer Schnittansicht mit einer an der Längsachse abgewinkelten Schnittebene das Ausführungsbeispiel gemäß Fig. 1 in der Vormontagestellung gemäß Fig. 2 vor einem Anordnen in einer in einem Anbauteil 30 ausgebildeten Anbauteilaufnahmeausnehmung 31. Aus der Darstellung gemäß Fig. 3 ist ersichtlich, dass durch die innenliegend geschützte Anordnung der freien Enden der Federarme 7 der Nietkörper 1 selbst bei Anstoßen der Außenseiten des Nietkörpers 1 beziehungsweise des Nietstiftes 2 an den Rändern der Anbauteilaufnahmeausnehmung 31 beschädigungsfrei in die Anbauteilaufnahmeausnehmung 31 einführbar ist, da die im Bereich des Einführendes 28 nach außen über die Vorderschrägen 10 überstehenden Fußstege 21, 22 einen zuverlässigen Schutz vor Verformungen bieten.

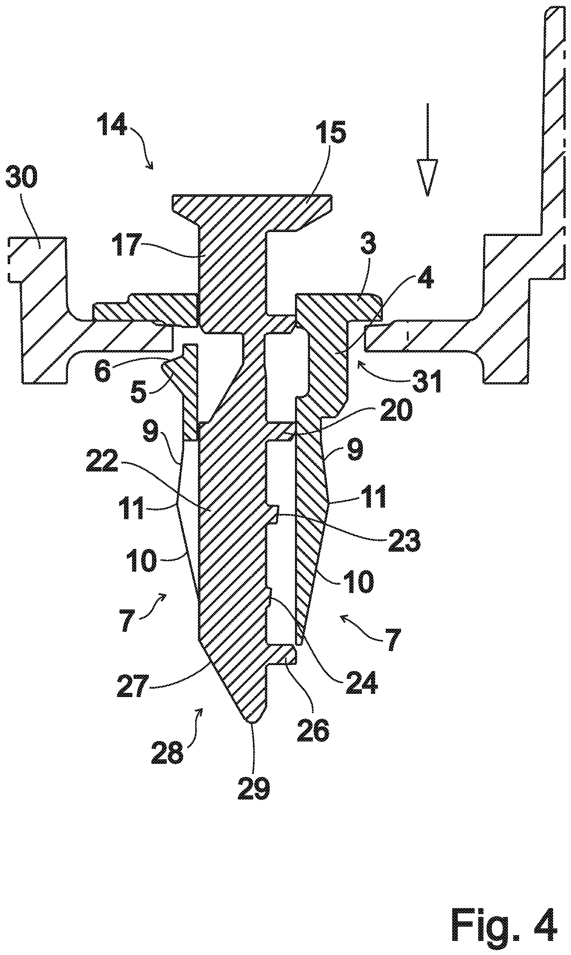

Fig. 4 zeigt in einer Schnittansicht das Ausführungsbeispiel gemäß Fig. 1 in der Vormontagestellung gemäß Fig. 2 und in einer in das Anbauteil 30 eingefügten Anordnung, in der die Hintergriffnasen 5 mit ihren Hinterrastflächen 6 die dem Auflageteller 3 abgewandte Seite der Anbauteilaufnahmeausnehmung 31 hintergreifen und den Nietkörper 1 in der Anbauteilaufnahmeausnehmung 31 sichern.

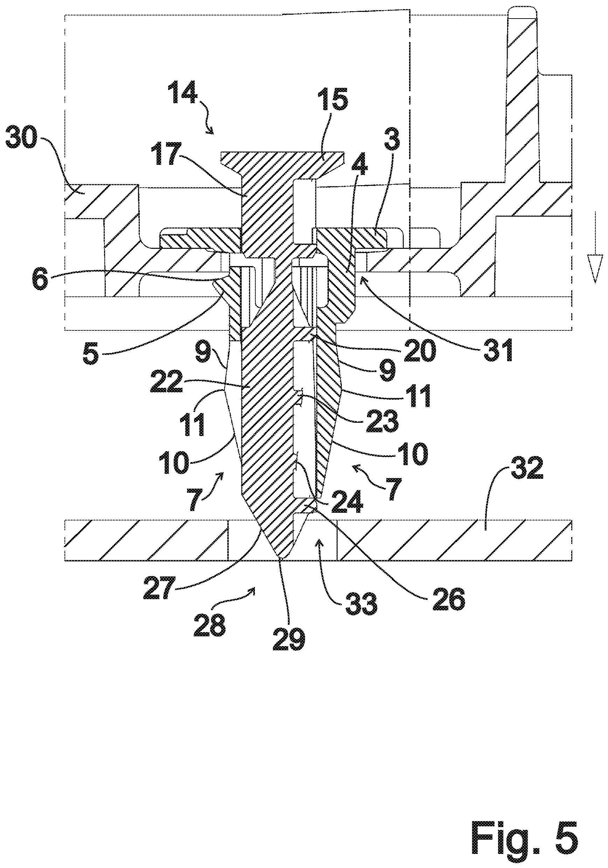

Fig. 5 zeigt in einer Schnittansicht das Ausführungsbeispiel eines erfindungsgemäßen Spreizniets gemäß Fig. 1 mit dem Nietstift 2 in der Vormontagestellung gemäß Fig. 2 und in der in das Anbauteil 30 eingefügten Anordnung gemäß Fig. 4 vor einem Einführen in eine in einem Trägerteil 32 ausgebildeten Trägerteilaufnahmeausnehmung 33. Aus Fig. 5 ist ersichtlich, dass bei Einführen des erfindungsgemäßen Spreizniets auch in die Trägerteilaufnahmeausnehmung 33 die Fußstege 21, 22 einen Schutz für die innen liegenden freien Enden der Federarme 7 bieten.

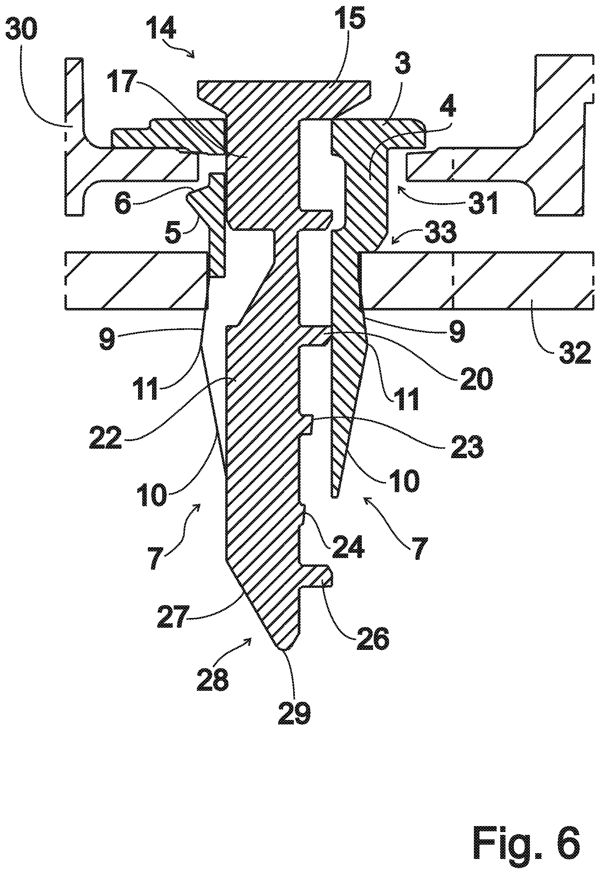

Fig. 6 zeigt in einer Schnittansicht das Ausführungsbeispiel eines erfindungsgemäßen Spreizniets gemäß Fig. 1 in einer in das Trägerteil 32 eingefügten Anordnung und mit dem Nietstift 2 in einer Endmontagestellung, in der der Nietstift 2 bis zum Anschlag des Betätigungstellers 15 an dem Auflageteller 3 in den Nietkörper 1 eingeschoben ist. In der Endmontagestellung des Nietstiftes 2 liegt der Zwischenteller 20 nunmehr auf der dem Auflageteller 3 abgewandten Seite des Trägerteiles 32 an den Federarmen 7 an, so dass die Federarme 7 mit ihren Rückschrägen 9 gegen die innen liegende Wand der Trägerteilausnehmung 33 gespannt sind und den Spreizniet in dem Trägerteil 32 fixieren, so dass das Anbauteil 30 mit dem Trägerteil 32 verbunden ist.

Zur Demontage des Anbauteiles 30 von dem Trägerteil 32 sowie zum Entfernen des Spreiznietes von dem Anbauteil 30 wird der Nietstift 2 von der Endmontagestellung gemäß Fig 6 entgegen der Einschieberichtung unter Freigabe der Federarme 7 für ein Einfedern radial nach innen herausgezogen. Nach Anschlag der Sicherungsnasen 25 in den Aussparungen zwischen den Federarmen 7 auf der dem Auflageteller 3 abgewandten Seite wird der Nietkörper 1 dabei mitgenommen.

## Patentansprüche

1. Spreizniet mit einem Nietkörper (1), der eine Anzahl von Spreizarmen (7) aufweist, die an einem Einsatzabschnitt (4) angeformt sind, sich von dem Einsatzabschnitt (4) weg erstrecken und in einem freien Ende enden, und mit einem in dem Nietkörper (1) in einer Längsrichtung verschiebbar gelagerten Nietstift (2), mit dem die Spreizarme (7) in einer eingeschobenen Endmontagestellung des Nietstifts (2) radial nach außen bewegbar sind, wobei der Nietstift (2) im Bereich eines von einem Handhabungsende (14) abgewandten Einführende (28) eine dem Handhabungsende (14) zugewandte Hinterraststufe (26) aufweist, der die freien Enden der Spreizarme (7) in einer Vormontagestellung des Nietstifts (2) gegenüber liegen, wobei der Nietstift (2) eine Anzahl von seitlich überstehenden Fußstegen (21, 22) aufweist, die sich von der Hinterraststufe (26) weg in Richtung des Handhabungsendes (14) erstrecken, **dadurch gekennzeichnet, dass** die Fußstege (21, 22) in der Vormontagestellung in einem an die Hinterraststufe (26) angrenzenden Endabschnitt radial nach außen über die Spreizarme (7) überstehen.

2. Spreizniet nach Anspruch 1, **dadurch gekennzeichnet, dass** vier Spreizarme (7) und vier Fußstege (21, 22) vorhanden sind.

3. Spreizniet nach Anspruch 1 oder Anspruch 2, **dadurch gekennzeichnet, dass** die Spreizarme (7) wenigstens im Bereich ihrer freien Enden mit einem Winkel von höchstens 45 Grad gegen die Längsrichtung angestellt sind.

4. Spreizniet nach Anspruch 3, **dadurch gekennzeichnet, dass** die Spreizarme (7) wenigstens im Bereich ihrer freien Enden mit einem Winkel von höchstens 20 Grad gegen die Längsrichtung angestellt sind.

5. Spreizniet nach einem der Ansprüche 1 bis 4, **dadurch gekennzeichnet, dass** auf der von dem Handhabungsende (14) des Nietstiftes (2) abgewandten Seite der Hinterraststufe (26) eine Anzahl von zu einer Spitze zusammenlaufenden, jeweils mit einem Fußsteg (21, 22) fluchtenden Spitzenstege (27) ausgebildet sind.

6. Spreizniet nach einem der Ansprüche 1 bis 5, **dadurch gekennzeichnet, dass** an wenigstens zwei Fußstegen (21, 22) in einem von der Hinterraststufe (26) beabstandeten Bereich jeweils eine radial auskragende Sicherungsnase (25) angeformt ist.

## Claims

1. Expanding rivet with a rivet body (1), comprising a number of expanding arms (7) formed on an insert section (4), expanding away from the insert section (4) and ending in a free end, and with a rivet pin (2), longitudinally displaceably mounted in the rivet body (1), with which the expanding arms (7) can be moved radially outwards in a pushed-in final assembly position of the rivet pin (2), wherein the rivet pin (2) comprises a rear arresting step (26) facing the handling end (14) in the area of an insertion end (28) facing away from a handling end (14), the free ends of the expanding arms (7) lying opposite each other in a pre-assembly position of the rivet pin (2), wherein the rivet pin (2) comprises a number of foot bridges (21, 22) projecting at the side, which extend from the rear arresting step (26) in the direction of the handling end (14), **characterised in that** the footbridges (21, 22) project radially outwards further than the expanding arms (7) in the pre-assembly position in an end section neighbouring the rear arresting step (26).

2. Expanding rivet according to claim 1, **characterised in that** four expanding arms (7) and four foot bridges (21, 22) are provided.

3. Expanding rivet according to claim 1 or claim 2, **characterised in that** the expanding arms (7) are aligned at an angle of 45 degrees maximum against the longitudinal direction at least in the area of their free ends.

4. Expanding rivet according to claim 3, **characterised in that** the expanding arms (7) are aligned at an angle of 20 degrees maximum against the longitudinal direction at least in the area of their free ends.

5. Expanding rivet according to one of the claims 1 to 4, **characterised in that** a number of pointed bridges (27), each flush with a foot bridge (21, 22), are formed on the side of the rear arresting step (26) facing away from the handling end (14) of the rivet pin (2) and running towards a tip.

6. Expanding rivet according to one of the claims 1 to 5, **characterised in that** a radially overhanging securing lug (25) each is formed in an area of the rear arresting step (26) spaced apart from at least two foot bridges (21, 22).

## Revendications

1. Rivet d'écartement avec un corps de rivet (1) comportant un certain nombre de bras d'écartement (7), qui sont formés sur une partie d'insert (4), qui s'étendent de la partie d'insert (4) et qui se terminent à une extrémité libre, rivet pourvu d'une tige de rivet (2) disposée mobile dans une direction longitudinale dans le corps de rivet (1), tige avec laquelle les bras d'écartement (7) sont mobiles radialement vers l'extérieur dans une position de montage finale rentrée de la tige de rivet (2), où la tige de rivet (2) présente un cran d'arrêt arrière (26) faisant face à l'extrémité de manipulation (14) dans une zone d'une extrémité d'introduction (28) tournant le dos à une extrémité de manipulation (14), cran auquel sont opposées les extrémités libres des bras d'écartement (7) dans une position de pré-assemblage de la tige de rivet (2), dans lequel la tige de rivet (2) comprend un certain nombre de sous-pieds (21, 22) dépassant latéralement, qui s'étendent depuis le cran d'arrêt arrière (26) en direction de l'extrémité de manipulation (14), **caractérisé en ce que** les sous-pieds (21, 22) dépassent radialement vers l'extérieur au-dessus des bras d'écartement (7) dans la position de pré-assemblage dans une section d'extrémité limitrophe du cran d'arrêt arrière (26).

2. Rivet d'écartement selon la revendication 1, **caractérisé en ce que** quatre bras d'écartement (7) et quatre sous-pieds (21, 22) sont présents.

3. Rivet d'écartement selon la revendication 1 ou la revendication 2, **caractérisé en ce que** les bras d'écartement (7) sont disposés au moins dans la zone de leurs extrémités libres avec un angle d'au plus 45 degrés opposés à la direction longitudinale.

4. Rivet d'écartement selon la revendication 3, **caractérisé en ce que** les bras d'écartement (7) sont disposés au moins dans la zone de leurs extrémités libres avec un angle d'au plus 20 degrés opposés à la direction longitudinale.

5. Rivet d'écartement selon l'une des revendications 1 à 4, **caractérisé en ce qu'**un certain nombre d'entretoises de pointe (27), convergeant vers une pointe, toujours affleurant avec un sous-pied (21, 22) sont formées sur un côté du cran d'arrêt arrière (26) opposé à l'extrémité de manipulation (14) de la tige de rivet (2).

6. Rivet d'écartement selon l'une des revendications 1 à 5, **caractérisé en ce qu'**un nez de sécurisation (25) dépassant radialement, respectivement, est formé au niveau d'au moins deux sous-pieds (21, 22) dans une zone espacée du cran d'arrêt arrière (26).
